# EUROPÄISCHE PATENTANMELDUNG

(11) **EP 3 026 072 A1**
(43) Veröffentlichungstag der Anmeldung: **01.06.2016**
(21) Anmeldenummer: 14195385.1
(22) Anmeldetag: 28.11.2014
(51) Int. Cl.: C08G 18/48, C08G 18/66, C08G 18/79, C08G 18/16, C08G 18/22, C08G 18/32

(54) **Verfahren zur Herstellung von Composites**

(71) Anmelder: Evonik Degussa GmbH, 45128 Essen (DE)
(72) Erfinder: Lomoelder, Rainer, 48153 Münster (DE); Hoppe, Dirk, 48301 Nottuln (DE); Nacke, Christoph, 46514 Schermbeck (DE); de Nardo, Sebastian, 45899 Gelsenkirchen (DE)

(57) **Zusammenfassung**

Gegenstand der Erfindung ist ein Verfahren zur Herstellung von Composites.

## Beschreibung

Gegenstand der Erfindung ist ein Verfahren zur Herstellung von Composites.

Polyurethane sind lange bekannt und wurden bereits für unterschiedliche Anforderungen maßgeschneidert hergestellt (US-A 5952053). Um die Polymerisationsgeschwindigkeit zu kontrollieren, wurde bereits eine große Anzahl verschiedener Metallkatalysatoren untersucht und eingesetzt. Neben den verbreiteten Organozinnverbindungen gehören hierzu auch Organoverbindungen bzw. organische Salze verschiedener anderer Elemente wie z. B. Quecksilber, Titan und Bismut.

In der Vergangenheit wurden für viele Anwendungen insbesondere organische Quecksilberkatalysatoren bevorzugt eingesetzt. Es ist allerdings bekannt, dass QuecksilberVerbindungen toxisch sind, sodass hier bereits in der Vergangenheit nach alternativen Katalysatorsystemen gesucht wurde. So wird in der WO 2005/058996 eine Katalysatormischung aus Titan- und Bismutverbindungen beschrieben, die ein ähnliches Reaktionsprofil wie Quecksilberverbindungen aufweist. Derartige Katalysatormischungen wurden für PolyurethanElastomere getestet. Ähnliche Katalysatorkombinationen werden auch in Patent US 5902835 erwähnt. Dabei wird eine Methode zur Herstellung von Polyurethanschäumen beschrieben, bei der Katalysatormischungen aus Titan-, Zirconium- oder Hafniumverbindungen in Kombination mit Bismutverbindungen oder Aminen eingesetzt werden. Patent EP 1432749 beschreibt ein Verfahren zur Herstellung von Polyurethanelastomeren, die Aminkatalysatoren und Katalysatormischungen aus Lithiumverbindungen, Titan- und/oder Zirkoniumverbindungen und optional BismutVerbindungen enthalten. Typische Anwendungsfelder für die beschriebenen Polyurethanelastomere sind Schäume, Domings, Schuhsolen, Kleb- und Dichtstoffe. Derartige Katalysatorkombinationen werden allerdings nicht für Composite-Anwendungen, also Anwendungen, in denen faserverstärkte Kunststoffe eingesetzt werden, beschreiben.

In den letzten Jahren wurden Polyurethansysteme entwickelt, die mit Fasermaterial verstärkt werden und aufgrund ihrer hohen Zähigkeit Anwendung im Automobilbau oder Windenergie finden. Die Anforderungen an Polyurethane für derartige Anwendungen sind sehr hoch. Wichtig ist insbesondere, dass die Matrix eine möglichst gute Anbindung an das Fasermaterial zeigt.

Daher war es die Aufgabe der vorliegenden Erfindung, eine Methode zur Herstellung von faserverstärkten Composite zu finden, die nach Aushärtung eine besonders gute Anbindung an die Faser zeigen.

Überraschend wurde gefunden, dass das erfindungsgemäße Verfahren nach Aushärtung eine besonders gute Anbindung an die Faser zeigt und damit insbesondere für den Einsatz in Composite-Anwendungen geeignet ist.

Gegenstand der Erfindung ist ein Verfahren zur Herstellung von Composites durch die Verfahrensschritte:
I. Herstellung einer reaktiven Zusammensetzung enthaltend
   A) mindestens ein organisches Diisocyanat und/oder Polyisocyanat und
   B) mindestens eine Verbindung mit mindestens einer gegenüber NCO-Gruppen reaktiven funktionellen Gruppe,
      wobei das Verhältnis von NCO-Gruppen von A) und der funktionellen Gruppen von B) von 1 : 2 bis 2 : 1 variiert;
   C) eine Katalysatormischung enthaltend
      C1) mindestens eine Titanverbindung
         und
      C2) mindestens eine Bismutverbindung
         im Verhältnis C1 : C2 von 100 : 1 bis 1 : 100;
   D) gegebenenfalls Zusatzstoffe;
      wobei sich die Mengen von A)-D) zu 100 Gew.-% addieren,
II. Direkte Imprägnierung eines faserförmigen Trägers mit der Zusammensetzung aus I.,
III. Formgebung zum Formteil
   und
IV. Aushärten der reaktiven Zusammensetzung I.

Der Begriff Composites wird im Rahmen dieser Erfindung synonym zu den Begriffen Verbundstoff, Verbund-Bauteile, Verbundwerkstoff, Verbund-Formteile, faserverstärkte Kunststoffe verwendet.

Die erfindungsgemäß eingesetzten Diisocyanate und Polyisocyanate können aus beliebigen aromatischen, aliphatischen, cycloaliphatischen und/oder (cyclo)aliphatischen Diisocyanate und/oder Polyisocyanaten bestehen.

Als aromatische Diisocyanate oder Polyisocyanate sind prinzipiell alle bekannten Verbindungen geeignet. Besonders geeignet sind 1,3- und 1,4-Phenylendiisocyanat, 1,5-Naphthylen-diisocyanat, Tolidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandiisocyanaten (MDI) und oligomeren Diphenylmethandiisocyanaten (Polymer-MDI), Xylylendiisocyanat, Tetramethylxylylen-diisocyanat und Triisocyanatotoluol. Geeignete aliphatische Diisocyanate oder Polyisocyanate besitzen vorteilhafterweise 3 bis 16 Kohlenstoffatome, vorzugsweise 4 bis 12 Kohlenstoffatome, im linearen oder verzweigten Alkylenrest.

Geeignete cycloaliphatische oder (cyclo)aliphatische Diisocyanate weisen vorteilhafterweise 4 bis 18 Kohlenstoffatome, vorzugsweise 6 bis 15 Kohlenstoffatome, im Cycloalkylenrest auf. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist.

Demgegenüber versteht man unter cycloaliphatischen Diisocyanaten solche, die nur direkt am cycloaliphatischen Ring gebundene NCO-Gruppen aufweisen, z. B. H₁₂MDI.

Beispiele sind Cyclohexandiisocyanat, Methylcyclohexandiisocyanat, Ethylcyclohexandiisocyanat, Propylcyclohexandiisocyanat, Methyldiethylcyclo-hexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate.

Bevorzugt werden Isophorondiisocyanat (IPDI), Hexamethylendiisocyanat (HDI), 4,4'-Diisocyanatodicyclohexylmethan, 2,4'-Diisocyanatodicyclohexylmethan, 2,2'-Diisocyanatodicyclohexylmethan allein oder in Mischungen der Isomeren (H₁₂MDI), 2-Methylpentandiisocyanat (MPDI), 2,2,4-Trimethylhexamethylendiisocyanat, 2,4,4-Trimethylhexamethylendiisocyanat sowie deren Gemische, (TMDI), Norbornandiisocyanat (NBDI), allein oder in Mischungen. Ganz besonders bevorzugt werden IPDI, HDI, TMDI und H₁₂MDI eingesetzt, allein oder in Mischungen.

Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexyl-isocyanat, 2-Isocyanatopropylcyclohexylisocyanat, 2,4`-Methylen-bis(cyclohexyl)düsocyanat, 1,4-Diisocyanato-4-methyl-pentan.

Es können auch die Isocyanurate, falls herstellbar, eingesetzt werden.

Selbstverständlich können auch Gemische der Diisocyanate und Polyisocyanate eingesetzt werden.

Weiterhin werden vorzugsweise Oligo- oder Polyisocyanate verwendet, die sich aus den genannte Diisocyanate oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und/oder HDI.

Als Verbindungen B) sind prinzipiell alle geeignet die über mindestens eine, bevorzugt mindestens zwei gegenüber NCO-Gruppen reaktive funktionelle Gruppen aufweisen. Geeignet sind als funktionelle Gruppen: OH-, NH₂-, NH-, SH-, CH-acide Gruppen. Bevorzugt enthalten die Verbindungen B) 2 bis 4 funktionelle Gruppen.

Besonders bevorzugt sind Alkoholgruppen und Aminogruppen.

Di- oder Polyamine B) sind in der Literatur bekannt. Diese können monomere, oligomere und/oder polymere Verbindungen sein. Monomere und oligomere Verbindungen sind bevorzugt ausgewählt aus der Gruppe Diamine, Triamine, Tetramine. Bevorzugt werden für die Komponente B) primäre und/oder sekundäre Di- oder Polyamine eingesetzt, besonders bevorzugt primäre Di- oder Polyamine. Die Aminogruppe der Di- oder Polyamine B) kann an einem primären, sekundären oder tertiären Kohlenstoffatom angebunden sein, bevorzugt an einem primären oder sekundären Kohlenstoffatom. Als Diamine und Polyamine sind prinzipiell geeignet: 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclohexylmethan, Isophorondiamin, 4,7-Dioxadecan-1,10-diamin, N-(2-Aminoethyl)-1,2-ethandiamin, N-(3-Aminopropyl)-1,3-propandiamin, N,N"-1,2-Ethandiylbis-(1,3-propandiamin), Adipinsäuredihydrazid, Diethylentriamin, Triethylentetramin, Tetraethylenpentamin, Pentaethylenhexamin, Dipropylentriamin, Hydrazin, 1,3- und 1,4-Phenylendiamin, 4,4'-Diphenylmethandiamin, Diaminodicyclohexylmethan, Hexamethylendiamin, Triacetondiamin, aminofunktionelle Polyethylenoxide bzw. Polypropylenoxide, Addukte aus Salzen der 2-Acrylamido-2-methylpropan-1-sulfonsäure sowie Hexamethylendiamine, die auch einen oder mehrere C₁-C₄-Alkylreste tragen können, genannt. Des Weiteren können auch disekundäre oder primäre/sekundäre Diamine, wie sie z. B. in bekannter Weise aus den entsprechenden diprimären Diaminen durch Reaktion mit einer Carbonylverbindung, wie z. B. einem Keton oder Aldehyd, und nachfolgender Hydrierung oder durch Addition von diprimären Diaminen an Acrylsäureester oder an Maleinsäurederivate gewonnen werden, eingesetzt werden.

Als Komponente B) können insbesondere die folgenden Amine eingesetzt werden:
aliphatische Amine, wie die Polyalkylenpolyamine, Diethylentriamin und Triethylentetramin, Trimethylhexamethylendiamin, 2-Methyl-pentandiamin,
Oxyalkylenpolyamine, wie Polyoxypropylendiamin und Polyoxypropylentriamin (z. B., Jeffamine® D-230, Jeffamine® D-400, Jeffamine® T-403, Jeffamine® T-5000), 1,13-Diamino-4,7,10-trioxatridecan; 2,2,4-Trimethylhexamethylendiamin, 2,4,4-Trimethylhexamethylendiamin allein oder in Mischungen der Isomeren, cycloaliphatische Amine, wie Isophorondiamin (3,5,5-Trimethyl-3-aminomethyl-cyclohexylamin), 4,4'-Diaminodicyclohexylmethan, 2,4'-Diaminodicyclohexylmethan 2,2'-Diaminodicyclohexylmethan allein oder in Mischungen der Isomeren (PACM), 3,3'-Dimethyl-4,4'-diamino-dicyclohexylmethan, N-Cyclohexyl-1,3-propandiamin, 1,2-Diaminocyclohexan, Piperazin, N-Aminoethylpiperazin, TCD-Diamin(3(4), 8(9)-Bis(aminomethyl)-tricyclo[5.2.1.0^{2,6}]decan), araliphatische Amine, wie Xylylendiamine, aromatische Amine, wie Phenylendiamine und 4,4'-Diaminodiphenylmethan; Addukthärter, welches die Umsetzungsprodukte von Epoxidverbindungen, insbesondere Glycidylether des Bisphenol A und F, mit überschüssigem Amin sind;
Polyamidoaminhärter, die durch Kondensation von Mono- und Polycarbonsäuren mit Polyaminen erhalten werden, insbesondere durch Kondensation von Dimerfettsäuren mit Polyalkylenpolyaminen;
und Mannichbasenhärter, die durch Umsetzung von ein- oder mehrwertigen Phenolen mit Aldehyden, insbesondere Formaldehyd, und Polyaminen erhalten werden.

Auch Mannichbasen z. B. auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol kommen in Frage. Darüber hinaus eignen sich auch Phenalkamine, die häufig in einer Mannichreaktion aus Cardanolen, Aldehyden und Aminen gewonnen werden.

Bevorzugt werden Verbindungen B) ausgewählt aus Isophorondiamin (3,5,5-Trimethyl-3-aminomethyl-cyclohexylamin, IPD), 4,4'-Diaminodicyclohexylmethan, 2,4'-Diaminodicyclohexylmethan 2,2'-Diaminodicyclohexylmethan allein oder in Mischungen der Isomeren (auch als PACM bezeichnet), und eine Mischung der Isomeren aus 2,2,4-Trimethylhexamethylendiamin und 2,4,4-Trimethylhexamethylendiamin (TMD), eingesetzt. Es können auch Mischungen der vorab genannten Verbindungen B) als Aminhärtungsmittel eingesetzt werden.

Auch Mischungen der genannten Diamine und Polyamine sind verwendbar.

Als Aminoalkohole seien beispielhaft Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol und Diisopropanolamin, allein oder als Mischungen, genannt.

Als CH-acide Verbindungen sind beispielsweise Derivate von Malonsäureestern, Acetylaceton und/oder Acetessigester geeignet.

Als Verbindungen B) eignen sich besonders Diole und Polyole mit mindestens zwei OH-Gruppen.

Als Diole und Polyole werden z. B. Ethylenglykol, 1,2-, 1,3-Propandiol, Diethylen-, Dipropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C, F, Norbornylenglykol, 1,4-Benzyldimethanol, -ethanol, 2,4-Dimethyl-2-ethylhexan-1,3-diol, 1,4- und 2,3-Butylenglykol, Di-ß-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), 2,2-Bis-(4-hydroxycyclohexyl)propan, 2,2-Bis-[4-(ß-hydroxyethoxy)-phenyl]propan, 2-Methyl-propandiol-1,3, 2-Methylpentandiol-1,5, 2,2,4(2,4,4)-Trimethylhexandiol-1,6, Hexantriol-1,2,6, Butantriol-1,2,4, Tris-(ß-hydroxyethyl)isocyanurat, Mannit, Sorbit, Polypropylenglykole, Polybutylenglykole, Xylylenglykol oder Hydroxypivalinsäureneopentylglykolester, Hydroxyacrylate, allein oder in Mischungen, eingesetzt.

Besonders bevorzugt sind 1,4-Butandiol, 1,2-Propandiol, Cyclohexandimethanol, Hexandiol, Neopentylglykol, Decandiol, Dodecandiol, Trimethylolpropan, Ethylenglykol, Triethylenglykol, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester. Sie werden allein oder in Mischungen verwendet.

Als Verbindungen B) eignen sich auch Diole und Polyole, die weitere funktionelle Gruppen enthalten. Hierbei handelt es sich um die an sich bekannten linearen oder schwach verzweigten hydroxylgruppenhaltigen Polyester, Polycarbonate, Polycaprolactone, Polyether, Polythioether, Polyesteramide, Polyacrylate, Polyvinylalkohole, Polyurethane oder Polyacetale, allein oder in Mischungen. Sie weisen vorzugsweise ein zahlenmittleres Molekulargewicht von 134 bis 20000 g/mol besonders bevorzugt 134 - 4000 g/mol auf.

Bei den hydroxylgruppenhaltigen Polymeren werden bevorzugt Polyester, Polyether, Polyacrylate, Polyurethane, Polyvinylalkohole und/oder Polycarbonate mit einer OH-Zahl von 5 - 500 mg KOH/Gramm eingesetzt. Sie weisen vorzugsweise ein zahlenmittleres Molekulargewicht von 134 bis 20000 g/mol besonders bevorzugt 134 - 4000 g/mol auf.

Bevorzugt sind lineare oder schwach verzweigte hydroxylgruppenhaltige Polyester - Polyesterpolyole - oder Gemische solcher Polyester. Sie werden z. B. durch Umsetzung von Diolen mit unterschüssigen Mengen an Dicarbonsäuren, entsprechenden Dicarbonsäureanhydriden, entsprechenden Dicarbonsäureestern von niederen Alkoholen, Lactonen oder Hydroxycarbonsäuren hergestellt.

Zur Herstellung der bevorzugten Polyesterpolyole geeignete Diole und Polyole sind neben den oben genannten Diolen und Polyolen auch 2-Methylpropandiol, 2,2-Dimethylpropandiol, Diethylenglykol, Dodecandiol-1,12, 1,4-Cyclohexandimethanol und 1,2- und 1,4-Cyclohexandiol.

Bevorzugt werden 1,4-Butandiol, 1,2-Propandiol, Cyclohexandimethanol, Hexandiol, Neopentylglykol, Decandiol, Dodecandiol, Trimethylolpropan, Ethylenglykol, Triethylenglykol, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester zur Herstellung der Polyesterpolyole eingesetzt.

Zur Herstellung der Polyesterpolyole geeignete Dicarbonsäuren oder Derivate können aliphatischer, cycloaliphatischer, aromatischer und/oder heteroaromatischer Natur sein und gegebenenfalls, z. B. durch Halogenatome, substituiert und/oder ungesättigt sein.

Zu den bevorzugten Dicarbonsäuren oder Derivaten zählen Bernstein-, Adipin-, Kork-, Azelain- und Sebacinsäure, 2,2,4 (2,4,4)-Trimethyladipinsäure, Phthalsäure, Phthalsäureanhydrid, Isophthalsäure, Terephthalsäure, Terephthalsäuredimethylester, Tetrahydrophthalsäure, Maleinsäure, Maleinsäureanhydrid und dimere Fettsäuren.

Geeignete Polyesterpolyole sind auch solche, die sich in bekannter Weise durch Ringöffnung aus Lactonen, wie -Caprolacton, und einfachen Diolen als Startermoleküle herstellen lassen. Auch Mono- und Polyester aus Lactonen, z. B. ε-Caprolacton oder Hydroxycarbonsäuren, z. B. Hydroxypivalinsäure, ε-Hydroxydecansäure, ε-Hydroxycapronsäure, Thioglykolsäure, können als Ausgangsstoffe für die Herstellung der Polymere G) eingesetzt werden. Polyester aus den oben (S. 6) genannten Polycarbonsäuren bzw. deren Derivaten und Polyphenolen, die Hydrochinon, Bisphenol-A, 4,4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1,6 und anderen Polyolen durch übliche Kondensationsreaktionen, z. B. mit Phosgen oder Diethyl- bzw. Diphenylcarbonat, oder aus cyclischen Carbonaten, wie Glykolcarbonat oder Vinylidencarbonat, durch Polymerisation in bekannter Weise erhältlich sind; Polyester der Kieselsäure, Polyester der Phosphorsäure, z. B. aus Methan-, Ethan-, ß-Chlorethan-, Benzol- oder Styrolphosphorsäure oder deren Derivate, wie z. B., Phosphorsäurechloride oder Phosphorsäureester und Polyalkoholen oder Polyphenolen der oben genannten Art; Polyester der Borsäure; Polysiloxane, wie z. B. die durch Hydrolyse von Dialkyldichlorsilanen mit Wasser und nachfolgende Behandlung mit Polyalkoholen, die durch Anlagerung von Polysiloxandihydriden an Olefinen, wie Allylalkohol oder Acrylsäure, erhältlichen Produkte, sind geeignet als Ausgangsstoffe für die Herstellung der Verbindungen B).

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist.

Bevorzugt einsetzbar sind zudem lineare oder verzweigte Polyetherpolyole. Beispiele dafür sind Lupranol 1000, 1100, 2032, 3402, 3300, 3422, 3504/1, 3505/1, Polyol 4800, 4640, 4525, 4360, Polytetramethylenetherglykole wie bspw. Terathane 250, 650, 1000 und 2000, Voranol CP 300, CP 450, CP 755, Caradol ET 380-02, ET 570-02, Sovermol 750, 760, 805, 810 und 815.

Ebenfalls bevorzugt einsetzbar sind OH-Gruppen haltige (Meth-)Acrylate und Poly(meth)acrylate. Sie werden hergestellt durch die Co-Polymerisation von (Meth-)Acrylaten, wobei einzelne Komponenten OH-Gruppen tragen andere hingegen nicht. So wird ein statistisch verteiltes OH-Gruppen haltiges Polymer erzeugt, welches keine, eine oder viele OH-Gruppen trägt. Solche Polymere werden beschreiben unter **High solids hydroxy acrylics with tightly controlled molecular weight.** van Leeuwen, Ben. SC Johnson Polymer, Neth. PPCJ, Polymers Paint Colour Journal (1997), 187(4392), 11 - 13;
**Special techniques for synthesis of high solid resins and applications in surface coatings.** Chakrabarti, Suhas; Ray, Somnath. Berger Paints India Ltd., Howrah, India. Paintindia (2003), 53(1), 33-34,36,38-40;
**VOC protocols and high solid acrylic coatings.** Chattopadhyay, Dipak K.; Narayan, Ramanuj; Raju, K. V. S. N. Organic Coatings and Polymers Division, Indian Institute of Chemical Technology, Hyderabad, India. Paintindia (2001), 51(10), 31-42.

Die zur Herstellung der Polyesterpolyole verwendeten Diole und Dicarbonsäuren bzw. deren Derivate können in beliebigen Mischungen eingesetzt werden.

Es können auch Mischungen ausgewählt aus Polyetherpolyen, Polyesterpolyolen und/oder Diolen eingesetzt werden.

Als Komponente B) können auch Epoxidgruppen haltige Verbindungen eingesetzt werden.

Geeignete Verbindungen B) sind die Reaktionsprodukte von Polycarbonsäuren und Glycidverbindungen, wie sie z. B. in der DE-OS 24 10 513 beschrieben sind.

Beispiele für Glycidylverbindungen, die verwendet werden können, sind Ester des 2,3-Epoxy-1-propanols mit monobasischen Säuren, die 4 bis 18 Kohlenstoffatome haben, wie Glycidylpalmitat, Glycidyllaurat und Glycidylstearat, Alkylenoxide mit 4 bis 18 Kohlenstoffatomen, wie Butylenoxid, und Glycidylether, wie Octylglycidylether.

Als Epoxidharzkomponente B) kommen alle Epoxydharze in Frage. Zu den Epoxidharzen zählen z. B. Polyepoxide auf Basis von Bisphenol A-diglycidylether, Bisphenol F-diglycidylether oder cycloaliphatische Typen.

Vorzugsweise werden erfindungsgemäß Epoxidharze eingesetzt, ausgewählt aus der Gruppe umfassend Epoxidharze auf Basis von Bisphenol A-diglycidylether, Epoxidharze auf Basis von Bisphenol F-diglycidylether und cycloaliphatische Typen wie z.B. 3,4-Epoxycyclohexyl-epoxyethan oder 3,4-Epoxycyclohexylmethyl-3,4-epoxy-cyclohexancarboxylat wobei Bisphenol A basierte Epoxidharze und Bisphenol F basierte Epoxidharze besonders bevorzugt sind. Erfindungsgemäß können auch Mischungen von Epoxidharzen als Komponente B) eingesetzt werden.

Verbindungen B) sind auch solche, die neben einer Epoxidgruppe noch mindestens eine weitere funktionelle Gruppe tragen, wie z. B. Carboxyl-, Hydroxyl-, Mercapto- oder Aminogruppen, die zur Reaktion mit einer Isocyanatgruppe befähigt ist. Besonders bevorzugt sind 2,3-Epoxy-1-propanol und epoxidiertes Sojaöl.

Es können beliebige Kombinationen der oben genannten Verbindungen B) eingesetzt werden.

Als Komponente C1 eignen sich Titan-Komplexverbindungen. Geeignete Liganden für Titan-Komplexverbindungen sind:
Alkyl-Gruppen, insbesondere: Methyl, Ethyl, Propyl, Butyl, Pentyl, Hexyl, Heptyl, Octyl, Nonyl, Decyl, Stearyl, iso-Stearyl;
Alkoholate, insbesondere Methanolat, Ethanolat, Propanolat, Isopropanolat, Butanolat, tert. Butanolat, Pentanolat, Neopentanolat, Hexanolat, Octanolat, 1-Naphtolat, Phenolat, Propylphenolat, 4-Dodecylphenolat, Chinolinolat, Diethylenglykolat, Pentandiolat, Hexandiolat, 2-Ethyl-1,3-Hexanediolat,
Carboxylate, insbesondere Formiat, Acetat, Propionoat, Butanoat, Isobutanoat, Pentanoat, Neopentanoat, Hexanoat, Cyclohexanoat, Heptanoat, Octanoat, 2-Ethylhexanoat, Nonanoat, Decanoat, Neodecanoat, Undecanoat, Dodecanoat, Stearat, Lactat, Oleat, Citrat, Benzoat, Salicylat und Phenylacetat, Hyroxyhexanoat;
1,3-Diketonate, insbesondere Acetylacetonat (2,4-Pentandionat), 2,2,6,6-Tetramethyl-3,5-heptandionat, 1,3-Diphenyl-1,3-propandionat (Dibenzoylmethanat), 1-Phenyl-1,3-butandionat und 2-Acetylcyclohexanonat; Oxinat;
1,3-Ketoesterate, insbesondere Methylacetoacetat, Ethylacetoacetat, Ethyl-2-methylacetoacetat, Ethyl-2-ethylacetoacetat, Ethyl-2-hexylacetoacetat, etyhl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat und 2-Oxo-cyclohexancarbonsäure-ethylesterat;
Aminoalkohole wie bspw. Diethanolamin oder Triethanolamin.

Bevorzugt werden Titan-Verbindungen mit folgenden Liganden eingesetzt: Propyl, Butyl, Pentyl, Propanolat, Isopropanolat, Butanolat, tert. Butanolat, Pentanolat, Diethylenglykolat, Pentandiolat, Hexandiolat, 2-Ethyl-1,3-Hexanediolat, Acetylacetonat, Ethylacetoacetat und Triethanolamin.

Es können auch Mischungen von Titan-Verbindungen eingesetzt werden.

Ganz besonders bevorzugt werden Titan-Verbindungen mit folgenden Liganden eingesetzt: Butyl, Pentyl, Butanolat, Pentanolat, Diethylenglykolat, Hexandiolat, 2-Ethyl-1,3- Ethylacetoacetat und Triethanolamin.

Es können auch Mischungen von den aufgeführten Titan-Komplexverbindungen eingesetzt werden.

Als Komponente C2 eignen sich Bismuth-Komplexverbindungen. Geeignete Liganden für Bismuth-Komplexverbindungen sind:
Alkoholate, insbesondere Methanolat, Ethanolat, Propanolat, Isopropanolat, Butanolat, tert. Butanolat, Pentanolat, Neopentanolat, Hexanolat und Octanolat; Carboxylate, insbesondere Formiat, Acetat, Propionoat, Butanoat, Isobutanoat, Pentanoat, Neopentanoat, Hexanoat, Cyclohexanoat, Heptanoat, Octanoat, 2-Ethylhexanoat, Nonanoat, Decanoat, Neodecanoat, Undecanoat, Dodecanoat, Lactat, Oleat, Citrat, Benzoat, Salicylat und Phenylacetat;
1,3-Diketonate, insbesondere Acetylacetonat (2,4-Pentandionat), 2,2,6,6-Tetramethyl-3,5-hepandionat, 1,3-Diphenyl-1,3-propandionat (Dibenzoylmethanat), 1-Phenyl-1,3-butandionat und 2-Acetylcyclohexanonat;
Oxinat;
1,3-Ketoesterate, insbesondere Methylacetoacetat, Ethylacetoacetat, Ethyl-2-methylacetoacetat, Ethyl-2-ethylacetoacetat, Ethyl-2-hexylacetoacetat, etyhl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat und 2-Oxo-cyclohexancarbonsäure-ethylesterat;
1,3-Ketoamidate, insbesondere N,N-Diethyl-3-oxo-butanamidat, N,N-Dibutyl-3-oxo-butanamidat, N,N-Bis(2-ethylhexyl)-3-oxo-butanamidat, N,N-Bis(2-methoxyethyl)-3-oxo-butanamidat, N,N-Dibutyl-3-oxo-heptanamidat, N,N-Bis(2-methoxyethyl)-3-oxo-heptanamidat, N,N-Bis(2-ethylhexyl)-2-oxo-cyclo-pentancarboxamidat, N,N-Dibutyl-3-oxo-3-phenylpropanamidat, N,N-Bis(2-methoxyethyl)-3-oxo-3-phenylpropanamidat;
und N-Polyoxyalkylen-1,3-ketoamidate wie insbesondere Acetoamidate von Polyoxyalkylenaminen mit ein, zwei oder drei Aminogruppen.

Bevorzugt sind Bismut-Komplexverbindungen mit Carboxylat-Liganden, insbesondere Octanoat, 2-Ethylhexanoat, Neodecanoat oderNeopentanoat, oder auch Bismutoxide.

Beispiele für solche Bismut-Komplexverbindungen sind K-Kat 348 (Bismut Carboxylat), XC B 221 (Bismutneodecanoat), XK 640 (Bismut Carboxylat) und XK 601 (Bismut Carboxylat) von King Industries, Bismutneodecanoat (Coscat 83 von Vertellus Performance Materials), Borchi Kat 320 (Bismut-2-Ethylhexanoat) und 315 (Bismutneodecanoat) von OMG Borchers GmbH und TIB KAT 716 (Bismut Carboxylat), 716LA (Bismut Carboxylat), 718 (Mischung aus Bitmut Carboxylat und Zinkneodecanoat), 720 (Bismut Carboxylat) und 789 (Bismutoxid) von TIB Chemicals.

Es können auch Mischungen von den aufgeführten Bismut-Komplexverbindungen eingesetzt werden.

Bevorzugt beträgt das Verhältnis C1:C2 von 10:1 bis 1:10. Besonders bevorzugt beträgt das Verhältnis C1:C2 von 10:1 bis 1:1.

### Träger

Das bevorzugt im erfindungsgemäßen Verfahren verwendete faserförmige Trägermaterial in dem Composite-Halbzeug ist dadurch gekennzeichnet, dass die faserförmigen Träger größtenteils aus Glas, Kohlenstoff, Kunststoffen wie Polyamid (Aramid) oder Polyester, Naturfasern, oder mineralischen Fasermaterialien wie Basaltfasern oder keramische Fasern bestehen, einzeln oder aus Mischungen, oder aus mehreren Lagen verschiedener Fasertypen.

Die faserförmigen Träger liegen als textile Flächengebilde aus Vlies, Maschenware, Gewirke oder Gestricke, nicht maschige Gebinde wie Gewebe, Gelege oder Geflechte, als Langfaser- oder Kurzfasermaterialien vor, einzeln oder aus mehreren Lagen verschiedener Typen.

Im Detail liegt folgende Ausführung vor: Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z. B. Gewebe-Kombinationen aus Aramid- und Glasfasern, oder Kohlenstoff und Glasfasern, können verwendet werden. Ebenso sind Hybrid-Composite-Bauteile mit Prepregs aus unterschiedlichen faserförmigen Trägern geeignet.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern).

Kohlenstofffasern kommen im Allgemeinen in Hochleistungsverbundstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z. B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser- Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

Die erfindungsgemäß eingesetzten Zusammensetzungen I. können. weitere Zusatzstoffe enthalten, die vorzugsweise ganz oder teilweise der Polyolkomponente zugemischt werden. Darunter werden Stoffe verstanden, die in der Regel zugesetzt werden, um die Eigenschaften des Polyurethans in gewünschter Richtung zu verändern, z. B. Viskosität, Benetzungsverhalten, Stabilität, Reaktionsgeschwindigkeit, Blasenbildung, Lagerfähigkeit oder Haftung, und auch Gebrauchseigenschaften dem Anwendungszweck anzupassen. Beispiele für Zusatzstoffe sind Verlaufsmittel, Trennmittel, Reaktionsverzögerer, Thixotropiermittel, Alterungsschutzmittel, Farbstoffe, Trockenmittel, Harze und/oder Netzmittel.

Weitere Zusatzstoffe können Stabilisatoren sein. Als Stabilisatoren im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer).

Weitere Zusatzstoffe können Weichmacher, Farbpaste, Molekularsiebe, Pigmente oder Füllstoffe sein. Es können auch Trockenmittel eingesetzt werden, die während der Lagerung Feuchtigkeit abfangen.

Die Additive werden so ausgewählt, dass sie keine Reaktionen oder Nebenreaktionen mit den Isocyanaten eingehen, zumindest nicht in der Zeitdauer der Vernetzungsreaktion.

Als Reaktionsverzögerer im Sinn dieser Erfindung werden Substanzen verstanden, die die Reaktion zwischen OH- und NCO-Gruppen verlangsamen. Dazu sind sauer wirkende Verbindungen geeignet, beispielsweise organische oder anorganische Carbonsäuren, Säurechloride, saure anorganische Salze oder andere saure organische Verbindungen. Diese sollen in Mengen von 0,05 bis 3,0 Gew.-% enthalten sein.

Erfindungsgemäß als Reaktionsverzögerer zu verwendende organische Säuren sind solche, die beispielsweise einen pKs-Bereich zwischen 2,8 und 4,5 aufweisen, wie Phthalsäure, Isophthalsäure, Terephthalsäure, Ascorbinsäure, Benzoesäure, o-Hydroxy-benzoesäure, p-Hydroxybenzoesäure, 2,3-Dihydroxybenzoesäure, 2,4-Dihydroxybenzoesäure, 3,4-Dihydroxybenzoesäure, Salicylsäure, Adipinsäure, Bersteinsäure, Apfelsäure, Acetylsalicylsäure, Alanin, β-Alanin, 4-Aminobuttersäure, Glycin, Milchsäure, Sarkosin, Serin. Es können aber auch Ameisensäure, Essigsäure, Monochlor- oder Dichloressigsäure, 2,4- oder 2,6-Dichlorphenylessigsäure; Phosphorsäure, Hydrogenphosphate; polymere Kationentauscher mit Carboxygruppen oder mit Orthophosphatgruppen; Lithiumchlorid, 4-Toluylensulfonylisocyanat oder Säurechloride der oben erwähnten Carbonsäuren eingesetzt werden.

Es können dabei die vorgenannten Verbindungen sowohl einzeln als auch Mischungen als Zusatzstoffe verwendet werden.

Genannte Zusatzstoffe werden z. B. in WO 99/55772, S. 15 25, und in "Plastics Additives", R. Gächter und H. Müller, Hanser Publishers 1983, beschrieben.

Zur Herstellung der erfindungsgemäß eingesetzten 2K-Polyurethan-Zusammensetzung I. wird zunächst die Polyolkomponente hergestellt. Dazu können die flüssigen Polyole gemischt werden, anschließend sind gegebenenfalls feste Anteile in der Mischung zu lösen. Das kann auch durch Erwärmen unterstützt werden. Anschließend werden die Hilfsstoffe zugemischt und dispergiert. Dabei soll der Feuchtigkeitsgehalt niedrig gehalten werden, beispielsweise kann Wasser durch die Verwendung von Trocknungsmittel wie Zeolithe vermindert werden oder durch Trocknung im Vakuum. Inerte Hilfsstoffe können auch teilweise der Isocyanat-Komponente zugemischt werden. Die zwei Komponenten werden bis zu ihrer Anwendung getrennt gelagert. Zur Anwendung werden diese beiden Komponenten in an sich bekannter Weise miteinander gemischt. Dazu können gängige Mischaggregate verwendet werden, die dem Fachmann allgemein bekannt sind. Nach Mischen der Komponenten wird das Gemisch über einen Schlauch in eine Form überführt.

Um eine erfindungsgemäße Anwendung zu ermöglichen, weist die erfindungsgemäß eingesetzte 2K-PU-Zusammensetzung I. eine Viskosität in gemischter Form von 30 bis 3000 mPas auf, gemessen bei einer Temperatur zwischen 20 und 80 °C. Insbesondere soll die Viskosität von 100 bis 1500 mPas betragen, bevorzugt unter 1000 mPas gemessen bei 40 bis 80 °C. Dabei kann die 2K-PU-Zusammensetzung bei diesen Temperaturen appliziert werden. Die Viskosität soll unmittelbar nach dem Mischen bestimmt werden, durch die einsetzende Vernetzungsreaktion nimmt sie langsam zu.

Die Zusammensetzung I. weist eine Glasübergangstemperatur (Tg) von 50 bis 160 °C auf (gemessen mit DSC, DIN 11357), insbesondere von 70 bis 120 °C.

Die Herstellung der Composite, also die Herstellung von Verbundbauteilen, kann wie folgt durchgeführt werden: Dabei werden die Zusammensetzungen I. durch Eintragen in eine Form appliziert. Diese soll die oben erwähnten Fasermaterialien enthalten, beispielsweise in einer gerichteten Form. Erfindungsgemäß werden zuerst batch-weise oder kontinuierlich die Komponenten B, C1, C2 und gegebenenfalls D gemischt. Anschließend wird die Mischung aus den Komponenten B, C1, C2 und gegebenenfalls D mit der Komponente A gemischt. Unmittelbar danach wird die flüssige Mischung in eine geschlossene Form eingebracht. In der Form sind die Fasermaterialien bereits enthalten und in der gewünschten Lage angeordnet. Die erfindungsgemäßen Zusammensetzungen können durch Vakuum oder Druck in die Form eingebracht werden. Dabei ist darauf zu achten, dass die Fließgeschwindigkeit so gewählt wird, dass Luft oder Gase zwischen den Fasermaterialien entweichen können. Bei einer anderen Arbeitsweise wird die Form, die das Fasermaterial enthält, mit einer Folie abgedeckt und am Rand vakuumdicht verschlossen. Die Form hat Öffnungen, durch die ein Unterdruck an die Form angelegt werden kann. Durch den Unterdruck wird die erfindungsgemäße Mischung gleichmäßig in die Form gesaugt. Bei dieser Arbeitsweise ist es vorteilhaft, dass durch den Unterdruck mögliche Einschlüsse von Blasen vermindert werden können. Solche Infusionsverfahren sind dem Fachmann im Prinzip bekannt.

Gegenstand der Erfindung ist auch die Verwendung der Composites, insbesondere mit faserförmigen Trägern aus Glas-, Kohle- oder Aramid-Fasern.

Gegenstand der Erfindung ist insbesondere auch die Verwendung der erfindungsgemäß hergestellten Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, z. B. für Rotorblätter bei Windkraftanlagen.

Gegenstand der Erfindung sind auch die erfindungsgemäß hergestellten Composite-Bauteile, aufgebaut aus mindestens einem faserförmigen Träger und mindestens einer vernetzten reaktiven Zusammensetzung.

Gegenstand der Erfindung sind auch Composites, erhalten durch die Verfahrensschritte:
I. Herstellung einer reaktiven Zusammensetzung enthaltend
   A) mindestens ein organisches Diisocyanat und/oder Polyisocyanat und
   B) mindestens eine Verbindung mit mindestens einer gegenüber NCO-Gruppen reaktiven funktionellen Gruppe,
      wobei das Verhältnis von NCO-Gruppen von A) und der funktionellen Gruppen von B) von 1 : 2 bis 2 : 1 variiert;
   C) eine Katalysatormischung enthaltend
      C1) mindestens eine Titanverbindung
         und
      C2) mindestens eine Bismutverbindung
         im Verhältnis C1 : C2 von 100 : 1 bis 1 : 100;
   D) gegebenenfalls Zusatzstoffe;
      wobei sich die Mengen von A)-D) zu 100 Gew.-% addieren,
II. Direkte Imprägnierung eines faserförmigen Trägers mit der Zusammensetzung aus I.,
III. Formgebung zum Formteil
   und
IV. Aushärten der reaktiven Zusammensetzung I.

### Beispiele

Die Herstellung der Verbundwerkstoffe aus Polyurethanmatrix und Faser erfolgte derart, dass man die Komponenten B, C1 und C2 und gegebenenfalls D bei 30°C vermischte, die Mischung auf 80°C erwärmte und mit der ebenfalls bei 80°C vorgewärmten Komponente A mithilfe eines Schnellrührers vermischte. Anschließend wurde das Gemisch in einen Drucktopf gestellt und bei 60°C temperiert. Der Drucktopf war über Schläuche mit einem geschlossenen Metallwerkzeug (Innengröße 320 x 320 x 2mm) verbunden. Das Metallwerkzeug wurde auf 90°C vortemperiert und mit dem Fasermaterial befüllt. Die Kavität des Werkzeugs betrug 2mm. Das Matrixsystem wurde bei 4bar vom Drucktopf in das Werkzeug infusioniert. Nach 3min wurde die Infusion beendet. Das Material im Werkzeug wurde für 40min bei 90°C gehärtet. Dann wurde entformt.

Zur faserverstärkten Platte wurde die scheinbare interlaminare Scherfestigkeit (ILSF, beschrieben in DIN EN ISO 14130) als Maß für die Faser-Matrix-Haftung ermittelt. Die scheinbare interlaminare Scherfestigkeit ist niedrig, wenn sie kleiner als 50 MPa ist. Sie ist mäßig-hoch, wenn sie zwischen 50 und 58 MPa liegt. Eine besonders gute Haftung zwischen Faser und Matrix ist dann erreicht, wenn die scheinbare interlaminare Scherfestigkeit 58 MPa oder mehr beträgt.

Die Polyurethanmatrix wurde durch die Umsetzung von 100 Teilen der Isocyanatkomponente (Tabelle 1) und 27 Teilen der Polyolkomponente (Tabelle 2) erhalten. Die den Handelsnamen entsprechenden chemischen Bezeichnungen der in den Beispielen genutzten Katalysatoren sind in Tabelle 3 aufgeführt. Die einzelnen Beispiele einschließlich der physikalischen und chemischen Eigenschaften sind in den Tabellen 4 und 5 aufgelistet.

**Tabelle 1: Zusammensetzung der Isocyanatkomponente**

| Gew.-% | Isocyanatkomponente |
|---|---|
| 24 | Vestanat T1890/100 |
| 76 | Vestanat T2500/100 |

**Tabelle 2: Zusammensetzung der Polyolkomponente**

| Gew.-% | Polyolkomponente |
|---|---|
| Rest auf 100 | Lupranol 3902 |
| 30 | 1,2-Propandiol |
| Y | Katalysatoren und Menge (siehe Tabelle 4) |

**Tabelle 3: Erklärung zu Handelsnamen der in den Beispielen eingesetzten Stoffe**

| Handelsname | Chemische Bezeichnung | Lieferant |
|---|---|---|
| Vestanat T1890/100 | Isophorondiisocyanat-Homopolymer (Isocyanurattyp), CAS-Nr. 53880-05-0 | Evonik Industries AG, Coatings & Additives, D-45764 Marl |
| Vestanat T2500/100 | Hexamethylen-1,6-diisocyanat-Homopolymer (Isocyanurattyp), CAS-Nr. 28182-81-2 | Evonik Industries AG, Coatings & Additives, D-45764 Marl |
| Lupranol 3902 | 1,1,1-Trimethylolpropan, propoxyliert, CAS-Nr. 25723-16-4 | BASF Polyurethanes GmbH Postfach 1140 D-49440 Lemfoerde |
| Propylenglycol | 1,2-Propandiol, CAS-Nr. 57-55-6 | Sigma-Aldrich Chemie GmbH Riedstr. 2, D-89555 Steinheim |
| TiB Kat 216 | Dibutylzinndilaurat, CAS-Nr. 77-58-7 | TIB Chemicals AG, Mühlheimer Str. 16-22, D-68219 Mannheim |
| Coscat 83 | Bismut(III)-neodecanoat in Neodecansäure, CAS-Nr. 34364-26-6 | Vertellus Performance Materials, 2110 High Point Road, Greensboro, NC 27403 USA |
| TIB KAT 716 | Bismut-Carboxylat | TIB Chemicals AG, Mühlheimer Str. 16-22, D-68219 Mannheim |
| Tyzor OGT | Tetrakis(2-ethylhexan-1,3-diolato)titan, CAS-Nr. 5575-43-9 | Dorf Ketal Speciality Catalysts LLC, 3727 Greenbriar Dr., Suite 114, Stafford TX 77477, USA |
| Tyzor AA 95 | Bis(acetylacetonato)titanium(IV)-ethoxid-isopropoxid in Butanol, CAS-Nr. 97281-09-9 | Dorf Ketal Speciality Catalysts LLC, 3727 Greenbriar Dr., Suite 114, Stafford TX 77477, USA |

**Tabelle 4: Beispiele gemäß Erfindung**

| Versuchs-Nr. | Titan-Katalysator | | Bismut-Katalysator | | ILSF [MPa] |
|---|---|---|---|---|---|
| | Name | Menge [%] | | Menge [%] | |
| 1 | Tyzor OGT | 0,1 | Coscat 83 | 0,01 | 58,8 |
| 2 | Tyzor AA 95 | 0,1 | Coscat 83 | 0,01 | 62,1 |
| 3 | Tyzor OGT | 0,1 | TIB Kat 716 | 0,01 | 61,3 |

**Tabelle 5: Vergleichsbeispiele**

| Versuchs-Nr. | Katalysator | | ILSF [MPa] |
|---|---|---|---|
| | Name | Menge [%] | |
| 4 | Tyzor OGT | 0,1 | 51,7 |
| 5 | Coscat 83 | 0,1 | 48,8 |
| 6 | Kein Katalysator | - | 47,6 |
| 7 | DBTL | 0,1 | 51,2 |

## Patentansprüche

1. Verfahren zur Herstellung von Composites durch die Verfahrensschritte:
I. Herstellung einer reaktiven Zusammensetzung enthaltend
A) mindestens ein organisches Diisocyanat und/oder Polyisocyanat
und
B) mindestens eine Verbindung mit mindestens einer gegenüber NCO-Gruppen reaktiven
funktionellen Gruppe,
wobei das Verhältnis von NCO-Gruppen von A) und der funktionellen Gruppen von B) von 1:2 bis 2:1 variiert;
C) eine Katalysatormischung enthaltend
C1) mindestens eine Titanverbindung
und
C2) mindestens eine Bismutverbindung
im Verhältnis C1:C2 von 100:1 bis 1:100;
D) gegebenenfalls Zusatzstoffe;
wobei sich die Mengen von A) - D) zu 100 Gew.-% addieren,
II. Direkte Imprägnierung eines faserförmigen Trägers mit der Zusammensetzung aus I.,
III. Formgebung zum Formteil
und
IV. Aushärten der reaktiven Zusammensetzung I.

2. Verfahren zur Herstellung von Composites nach Anspruch 1, **dadurch gekennzeichnet, dass** Diisocyanate und/oder Polyisocyanate A) ausgewählt aus aromatischen, aliphatischen, cycloaliphatischen und/oder (cyclo)aliphatischen Diisocyanaten und/oder Polyisocyanaten, wobei auch die Isocyanurate einsetzbar sind, eingesetzt werden.

3. Verfahren zur Herstellung von Composites nach mindestens einem der vorherigen Ansprüche, **dadurch gekennzeichnet, dass** Isophorondiisocyanat, Hexamethylendiisocyanat, 4,4'-Diisocyanatodicyclohexylmethan, 2,4'-Diisocyanatodicyclohexylmethan, 2,2'-Diisocyanatodicyclohexylmethan allein oder in Mischungen der Isomeren, 2-Methylpentandiisocyanat, 2,2,4-Trimethylhexamethylendiisocyanat oder 2,4,4-Trimethylhexamethylendiisocyanat sowie deren Gemische, Norbornandiisocyanat, allein oder in Mischungen, eingesetzt werden.

4. Verfahren zur Herstellung von Composites nach mindestens einem der vorherigen Ansprüche, **dadurch gekennzeichnet, dass** als Verbindungen B) Verbindungen mit 2 bis 4 funktionellen Gruppen eingesetzt werden.

5. Verfahren zur Herstellung von Composites nach mindestens einem der vorherigen Ansprüche, **dadurch gekennzeichnet, dass** als Verbindungen B) Verbindungen mit funktionelle Gruppen ausgewählt aus OH-, NH₂-, NH-, SH-, CH-aciden Gruppen, eingesetzt werden.

6. Verfahren zur Herstellung von Composites nach mindestens einem der vorherigen Ansprüche, **dadurch gekennzeichnet, dass** als Verbindungen B) Verbindungen mit mindestens zwei Alkoholgruppen und/oder Aminogruppen eingesetzt werden.

7. Verfahren zur Herstellung von Composites nach mindestens einem der vorherigen Ansprüche, **dadurch gekennzeichnet, dass** Verbindungen B) ausgewählt aus 1,2-Ethylendiamin, 1,2 Propylendiamin, 1,3-Propylendiamin, 1,2-Butylendiamin, 1,3-Butylendiamin, 1,4 Butylendiamin, 2-(Ethylamino)ethylamin, 3-(Methylamino)propylamin, 3-(Cyclohexylamino)propylamin, 4,4'-Diaminodicyclohexylmethan, Isophorondiamin, 4,7-Dioxadecan-1,10-diamin, N-(2-Aminoethyl)-1,2-ethandiamin, N-(3-Aminopropyl)-1,3-propandiamin, N,N"-1,2-Ethandiylbis-(1,3-propandiamin), Adipinsäuredihydrazid, Diethylentriamin, Triethylentetramin, Tetraethylenpentamin, Pentaethylenhexamin, Dipropylentriamin, Hydrazin, 1,3- 1,4-Phenylendiamin, 4,4' Diphenylmethandiamin, Diaminodicyclohexylmethan, Hexamethylendiamin, Triacetondiamin, aminofunktionelle Polyethylenoxide, Polypropylenoxide:
Addukte aus Salzen der 2-Acrylamido-2-methylpropan-1-sulfonsäure, Hexamethylendiamine, die auch einen oder mehrere C1-C4-Alkylreste tragen können, disekundäre oder primäre/sekundäre Diamine, wie sie aus den entsprechenden diprimären Diaminen durch Reaktion mit einer Carbonylverbindung, und nachfolgender Hydrierung oder durch Addition von diprimären Diaminen an Acrylsäureester oder an Maleinsäurederivate gewonnen werden, eingesetzt werden.

8. Verfahren zur Herstellung von Composites nach mindestens einem der vorherigen Ansprüche, **dadurch gekennzeichnet, dass** als Komponente B) die folgenden Amine, allein oder in Mischungen, eingesetzt werden:
aliphatische Amine, ausgewählt aus Polyalkylenpolyamine, Diethylentriamin, Triethylentetramin, Trimethylhexamethylendiamin, 2-Methyl-pentandiamin, Polyoxypropylendiamin, Polyoxypropylentriamin, 1,13-Diamino-4,7,10-trioxatridecan, 2,2,4-Trimethylhexamethylendiamin, 2,4,4-Trimethylhexamethylendiamin allein oder in Mischungen der Isomeren;
cycloaliphatische Amine, ausgewählt aus Isophorondiamin (3,5,5-Trimethyl-3-aminomethyl-cyclohexylamin), 4,4'-Diaminodicyclohexylmethan, 2,4'-Diaminodicyclohexylmethan 2,2'-Diaminodicyclohexylmethan allein oder in Mischungen der Isomeren (PACM)), 3,3'-Dimethyl-4,4'-diamino-dicyclohexylmethan, N-Cyclohexyl-1,3-propandiamin, 1,2-Diaminocyclohexan, Piperazin, N-Aminoethylpiperazin, 3(4),8(9)-Bis(aminomethyl)-tricyclo[5.2.1.02,6]decan; araliphatische Amine, ausgewählt aus den Xylylendiaminen;
aromatische Amine, ausgewählt aus Phenylendiamine und 4,4'-Diaminodiphenylmethan; Addukthärter, welches die Umsetzungsprodukte von Epoxidverbindungenmit überschüssigem Amin sind;
Polyamidoaminhärter, die durch Kondensation von Mono- und Polycarbonsäuren mit Polyaminen erhalten werden;
Mannichbasenhärter, die durch Umsetzung von ein- oder mehrwertigen Phenolen mit Aldehyden, erhalten werden.
Mannichbasen auf Basis von Phenol und/oder Resorcin, Formaldehyd und m-Xylylendiamin und/oder N-Aminoethylpiperazin;
Abmischungen von N-Aminoethylpiperazin mit Nonylphenol und/oder Benzylalkohol; Phenalkamine.

9. Verfahren zur Herstellung von Composites nach mindestens einem der vorherigen Ansprüche, **dadurch gekennzeichnet, dass** als Amine B) allein oder in Mischungen, Isophorondiamin, 4,4'-Diaminodicyclohexylmethan, 2,4'-Diaminodicyclohexylmethan, 2,2'-Diaminodicyclohexylmethan, allein oder in Mischungen der Isomeren, oder eine Mischung aus den Isomeren von 2,2,4-Trimethylhexamethylendiamin und 2,4,4-Trimethylhexamethylendiamin, eingesetzt werden.

10. Verfahren zur Herstellung von Composites nach mindestens einem der vorherigen Ansprüche, **dadurch gekennzeichnet, dass** als Aminoalkohole B) Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol und Diisopropanolamin, allein oder als Mischungen, eingesetzt werden.

11. Verfahren zur Herstellung von Composites nach mindestens einem der vorherigen Ansprüche, **dadurch gekennzeichnet, dass** als Komponente B) Ethylenglykol, 1,2-, 1,3-Propandiol, Diethylen-, Dipropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C, F, Norbornylenglykol, 1,4-Benzyldimethanol, -ethanol, 2,4-Dimethyl-2-ethylhexan-1,3-diol, 1,4- und 2,3-Butylenglykol, Di-ß-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0²,⁶]decan (Dicidol), 2,2-Bis-(4-hydroxycyclohexyl)propan, 2,2-Bis-[4-(ß-hydroxyethoxy)-phenyl]propan, 2-Methyl-propandiol-1,3, 2-Methylpentandiol-1,5, 2,2,4(2,4,4)-Trimethylhexandiol-1,6, Hexantriol-1,2,6, Butantriol-1,2,4, Tris-(ß-hydroxyethyl)isocyanurat, Mannit, Sorbit, Polypropylenglykole, Polybutylenglykole, Xylylenglykol oder Hydroxypivalinsäureneopentylglykolester, Hydroxyacrylate, allein oder in Mischungen, eingesetzt werden.

12. Verfahren zur Herstellung von Composites nach mindestens einem der vorherigen Ansprüche, **dadurch gekennzeichnet, dass** als Komponente B) hydroxylgruppenhaltigen Polyester, Polycarbonate, Polycaprolactone, Polyether, Polythioether, Polyesteramide, Polyacrylate, Polyvinylalkohole, Polyurethane oder Polyacetale, allein oder in Mischungen, eingesetzt werden.

13. Verfahren zur Herstellung von Composites nach mindestens einem der vorherigen Ansprüche, **dadurch gekennzeichnet, dass** als Komponente B) Epoxidgruppen haltige Verbindungen eingesetzt werden.

14. Verfahren zur Herstellung von Composites nach mindestens einem der vorherigen Ansprüche, **dadurch gekennzeichnet, dass** als Komponente C1 Titan-Komplexverbindungen mit Liganden ausgewählt aus:
Alkyl-Gruppen, Alkoholate, Carboxylate, 1,3-Diketonate, 1,3-Ketoesterate, Aminoalkohole, allein oder in Mischungen, eingesetzt werden.

15. Verfahren zur Herstellung von Composites nach mindestens einem der vorherigen Ansprüche, **dadurch gekennzeichnet, dass** als Komponente C1 Titan-Komplexverbindungen mit Liganden ausgewählt aus:
Alkyl-Gruppen, insbesondere: Methyl, Ethyl, Propyl, Butyl, Pentyl, Hexyl, Heptyl, Octyl, Nonyl, Decyl, Stearyl, iso-Stearyl;
Methanolat, Ethanolat, Propanolat, Isopropanolat, Butanolat, tert. Butanolat, Pentanolat, Neopentanolat, Hexanolat, Octanolat, 1-Naphtolat, Phenolat, Propylphenolat, 4-Dodecylphenolat, Chinolinolat, Diethylenglykolat, Pentandiolat, Hexandiolat, 2-Ethyl-1,3-Hexanediolat,
Formiat, Acetat, Propionoat, Butanoat, Isobutanoat, Pentanoat, Neopentanoat, Hexanoat, Cyclohexanoat, Heptanoat, Octanoat, 2-Ethylhexanoat, Nonanoat, Decanoat, Neodecanoat, Undecanoat, Dodecanoat, Stearat, Lactat, Oleat, Citrat, Benzoat, Salicylat und Phenylacetat, Hyroxyhexanoat;
Acetylacetonat (2,4-Pentandionat), 2,2,6,6-Tetramethyl-3,5-heptandionat, 1,3-Diphenyl-1,3-propandionat (Dibenzoylmethanat), 1-Phenyl-1,3-butandionat und 2-Acetylcyclohexanonat; Oxinat;
Methylacetoacetat, Ethylacetoacetat, Ethyl-2-methylacetoacetat, Ethyl-2-ethylacetoacetat, Ethyl-2-hexylacetoacetat, etyhl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat und 2-Oxo-cyclohexancarbonsäure-ethylesterat;
Diethanolamin oder Triethanolamin,
allein oder in Mischungen, eingesetzt werden.

16. Verfahren zur Herstellung von Composites nach mindestens einem der vorherigen Ansprüche, **dadurch gekennzeichnet, dass** als Komponente C2 Bismut-Komplexverbindungen mit Liganden ausgewählt aus:
Alkoholate, Carboxylate, 1,3-Diketonate, 1,3-Ketoesterate, Oxinate, 1,3-Ketoamidate, N-Polyoxyalkylen-1,3-ketoamidate, allein oder in Mischungen, eingesetzt werden.

17. Verfahren zur Herstellung von Composites nach mindestens einem der vorherigen Ansprüche, **dadurch gekennzeichnet, dass** als Komponente C2 Bismut-Komplexverbindungen mit Liganden ausgewählt aus:
Methanolat, Ethanolat, Propanolat, Isopropanolat, Butanolat, tert. Butanolat, Pentanolat, Neopentanolat, Hexanolat und Octanolat; Carboxylate, insbesondere Formiat, Acetat, Propionoat, Butanoat, Isobutanoat, Pentanoat, Neopentanoat, Hexanoat, Cyclohexanoat, Heptanoat, Octanoat, 2-Ethylhexanoat, Nonanoat, Decanoat, Neodecanoat, Undecanoat, Dodecanoat, Lactat, Oleat, Citrat, Benzoat, Salicylat und Phenylacetat; Acetylacetonat (2,4-Pentandionat), 2,2,6,6-Tetramethyl-3,5-hepandionat, 1,3-Diphenyl-1,3-propandionat (Dibenzoylmethanat), 1-Phenyl-1,3-butandionat und 2-Acetylcyclohexanonat; Oxinat;
Methylacetoacetat, Ethylacetoacetat, Ethyl-2-methylacetoacetat, Ethyl-2-ethylacetoacetat, Ethyl-2-hexylacetoacetat, etyhl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat und 2-Oxo-cyclohexancarbonsäure-ethylesterat; N,N-Diethyl-3-oxo-butanamidat, N,N-Dibutyl-3-oxo-butanamidat, N,N-Bis(2-ethylhexyl)-3-oxo-butanamidat, N,N-Bis(2-methoxyethyl)-3-oxo-butanamidat, N,N-Dibutyl-3-oxo-heptanamidat, N,N-Bis(2-methoxyethyl)-3-oxo-heptanamidat, N,N-Bis(2-ethylhexyl)-2-oxo-cyclo-pentancarboxamidat, N,N-Dibutyl-3-oxo-3-phenylpropanamidat, N,N-Bis(2-methoxyethyl)-3-oxo-3-phenylpropanamidat, Acetoamidate von Polyoxyalkylenaminen mit ein, zwei oder drei Aminogruppen,
allein oder in Mischungen, eingesetzt werden.

18. Verfahren zur Herstellung von Composites nach mindestens einem der vorherigen Ansprüche, **dadurch gekennzeichnet, dass** als Komponente C2 Bismut-Komplexverbindungen mit Liganden ausgewählt aus: Octanoat, Ethylhexanoat, Neodecanoat oder Neopentanoat, eingesetzt werden.

19. Verfahren zur Herstellung von Composites nach mindestens einem der vorherigen Ansprüche, **dadurch gekennzeichnet, dass** die faserförmigen Träger aus Glas, Kohlenstoff, Kunststoffen, Naturfasern und/oder mineralischen Fasermaterialien, bestehen, einzeln oder aus Mischungen, oder aus mehreren Lagen verschiedener Fasertypen.

20. Verfahren zur Herstellung von Composites nach mindestens einem der vorherigen Ansprüche, **dadurch gekennzeichnet, dass** weitere Zusatzstoffe ausgewählt aus Verlaufsmitteln, Trennmitteln, Reaktionsverzögerern, Thixotropiermitteln, Alterungsschutzmitteln, Farbstoffen, Trockenmitteln, Harzen, Netzmitteln, Stabilisatoren, Weichmachern, Farbpasten, Molekularsiebe, Pigmenten, Füllstoffen, allein oder in Mischungen, eingesetzt werden.

21. Verwendung der Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, für Rotorblätter bei Windkraftanlagen.

22. Composites, erhalten durch die Verfahrensschritte:
I. Herstellung einer reaktiven Zusammensetzung enthaltend
A) mindestens ein organisches Diisocyanat und/oder Polyisocyanat
und
B) mindestens eine Verbindung mit mindestens einer gegenüber NCO-Gruppen reaktiven funktionellen Gruppe,
wobei das Verhältnis von NCO-Gruppen von A) und der funktionellen Gruppen von B) von 1:2 bis 2/1 variiert;
C) eine Katalysatormischung enthaltend
C1) mindestens eine Titanverbindung
und
C2) mindestens eine Bismutverbindung
im Verhältnis C1:C2 von 100:1 bis 1:100;
D) gegebenenfalls Zusatzstoffe;
wobei sich die Mengen von A)-D) zu 100 Gew.-% addieren,
II. Direkte Imprägnierung eines faserförmigen Trägers mit der Zusammensetzung aus I.,
III. Formgebung zum Formteil
und
IV. Aushärten der reaktiven Zusammensetzung I.
